# EUROPEAN PATENT APPLICATION

(11) **EP 1 164 584 A1**
(43) Date of publication of application: **19.12.2001**
(21) Application number: 00112771.1
(22) Date of filing: 16.06.2000
(51) Int. Cl.: G11B 17/22, G11B 17/30, G11B 17/04

(54) **Changer for CD and/or DVD disks**

(71) Applicant: THOMSON multimedia S.A., 92648 Boulogne Cedex (FR)
(72) Inventor: Woo, Jisung, Shatin, N.T., Hong Kong (CN)
(74) Representative: Kurth, Dieter, Dipl.-Ing.

(57) **Abstract**

A changer for CD and/or DVD disks generally includes a drawer slidably mounted within a chassis of the changer and supporting a number of disk plates arranged one above the other and each holding a disk therein.

It is an object of the invention to provide a changer of this kind modified in such a way that the user can access all disks inside the changer and access all disks except disks which are in a playback position by a pick-up or an equivalent reader.

The disk plates (7) are each mounted at one end via a hinge (9, 10) at the drawer (3) in such a way that they are pivotable about a horizontal axis of the chassis (1) of the changer.

## Description

The present invention relates to a changer for CD and/or DVD disks according to the preamble of claim 1. Such a changer is disclosed within US 5 781 523.

Such a changer for CD and/or DVD disks generally consists of a main chassis including the drive elements and the electrical modules for processing the signals for the playback operation. A drawer is slidably mounted within the chassis. The drawer normally resides in the chassis and can be pulled away from the chassis for playback operation or for changing a disk. The drawer includes a number of disk plates positioned one above the other each disk plate holding a CD or DVD disk therein. The disk plates are provided with openings by means of which a disk within the disk plate can be gripped manually or by mechanical gripping means and can be pulled out from the disk plate for changing the disk or for a playback operation. Compact disk changers according to prior art do not allow to change all disks at once or changing a disk or changing disks during playback operation of a disk.

It is an object of the present invention to provide a changer for CD and/or DVD disks which enables a user to access all disks inside the changer and to access all disks except disks which are played by a pick-up means or an equivalent reader. This object is solved by the invention as defined in claim 1. Advantageous embodiments and further developments of the invention are set forth within the subclaims.

According to the invention the disk plates each holding a disk therein each are mounted at one end via a hinge at the drawer in such a way that they can pivot about an horizontal axis of the chassis of the changer.

The changer according to the present invention has several advantages. Due to the pivoting movement of the disk plates and their corresponding spreading operation the user can access all disks inside the changer and also access all disks except that disk or those disks which are just subjected to playback on a pick-up or an equivalent reader. Due to the spreading of the several disk plates it is easy to grip a disk or several disks at its circumference through a corresponding opening within the disk plate manually or by electro-mechanical gripping means and pull the disk away from the disk plate for feeding it to a playback position or to replace a disk by another disk.

In one embodiment of the invention each disk plate is provided with a pin at its edge remote from the edge at which the disk can be drawn from the disk plate said pin cooperating with an opening in a side wall of the drawer and/or an opening within a side wall of the chassis. Preferably the disk plate comprises at each of its opposite edges two pins the first pin cooperating with an opening within a side wall of the drawer and the second pin cooperating with an opening within a sidewall of the chassis. Preferably the opening within the sidewall of the chassis has the form of a slot extending perpendicular to the pivoting axis of the disk plates.

Within a further embodiment of the invention the slot within the side wall of the chassis has a horizontal section and a subsequent downwardly inclined section enabling a pivoting of the disk plate within the drawer about a horizontal axis. Preferably the lowest slot for the lowest disk plate has substantially no downwardly inclined section and the length of the downwardly inclined sections increases from one disk plate to the next above positioned disk plate so that the disk plates can pivot by angles increasing from the lowest to the upper disk plate so that the disk plates become spreaded from eachother.

The pivoting operation about the hinges of the disk plates can be implemented manually or by electrical-mechanical driving means.

In order to better understand the invention some preferred an advantageous embodiments of the invention will be described by means of the accompanying drawing.
- Fig. 1: shows a disk changer according to the invention with not-pivoted disk plates,
- Fig. 2: shows the disk player with pivoted and spreaded disk plates,
- Fig. 3: shows another form of the disk player with pivoted and spreaded disk plates,
- Fig. 4: shows a disk player with spreaded disk plates according to a preferred embodiment of the invention,
- Fig. 5: shows a disk changer with one disk plate depicted in explosion view,
- Fig. 6: shows a diagram for a disk moving mechanism,
- Fig. 7: shows a special choosing platter,
- Fig. 8: shows a pull back platter,
- Fig. 9: shows a pull down platter with a disk in its playback position and
- Fig. 10: shows an open drawer during playback operation of a disk.

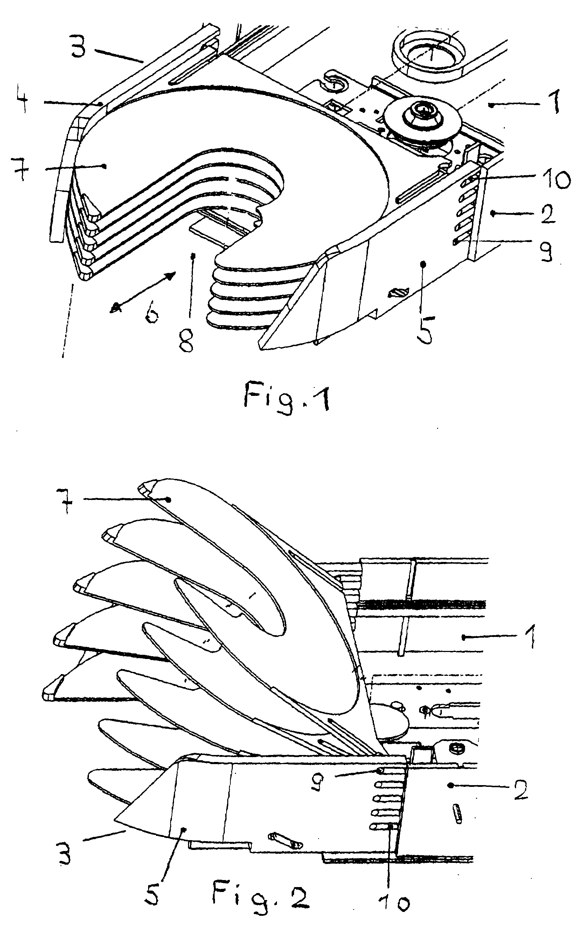

Fig. 1 shows a chassis 1 of a disk changer together with one side wall 2. A drawer 3 having side walls 4, 5 is slidably mounted within the chassis 1. That means it can be moved manually or by electro-mechanical driving means in direction of the arrow 6 into the chassis 1 and can be pulled away from the chassis 1 as shown in Fig. 1. The drawer 3 supports between its side walls 4, 5 five disk plates 7 arranged one above the other each of said disk plates 7 being arranged for holding a corresponding CD or DVD disk therein (not shown). Each disk plate 7 is provided with an opening 8 through which a disk positioned in a disk plate 7 can be gripped manually or by electro-mechanical means for feeding the disk to a playback position or for replacing the disk within one of the disk plates 7 by another disk.

The disk plates 7 are pivotally mounted by hinges at the side walls 4, 5 of the drawer 7. This pivotable mounting is implemented by pins 9 at a rear edge of the disk plates 7 cooperating with slots 10 within the side walls 4, 5. In Fig. 1 the disk plates 7 are shown in a position wherein they are not pivoted.

Fig. 2 shows the same arrangement as Fig. 1 wherein the five disk plates 7 are pivoted about the hinges formed by the pins 9 and the slots 10. It can be seen that the disk plates 7 are pivoted by an increasing angle so that they are spread away from each other. Thereby it is achieved that a special disk (not shown) arranged in one disk plate or all disks in the five disk plates 7 can be simultaneously gripped and pulled away from the disk plates 7. The pivoting axis is defined substantially by the pins 9 and the slots 10 at the rear edge of the disk plates 7.

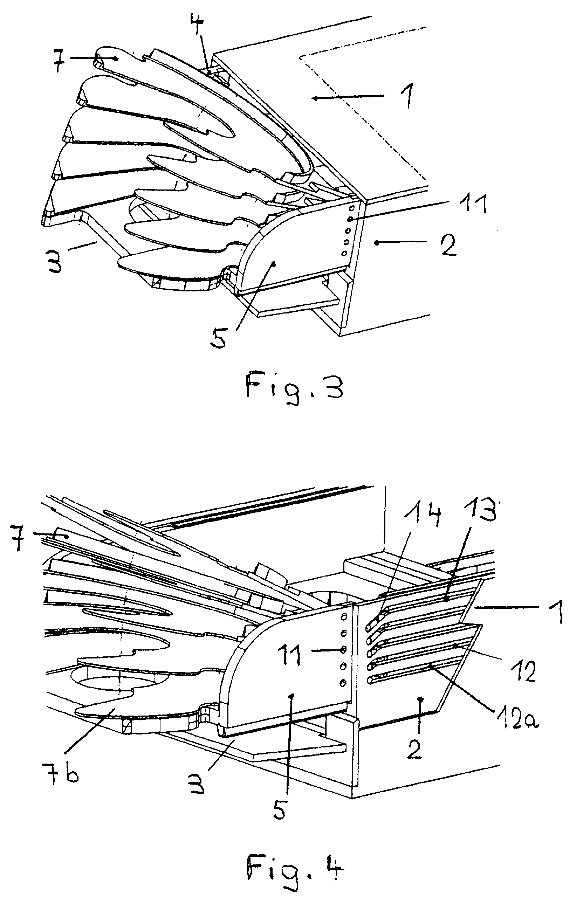

Fig. 3 shows a new CD platter working according to the principle described. The pins 9 not visible in Fig. 3 cooperate with holes 11 within the side wall 5 and the corresponding opposite side wall 4.

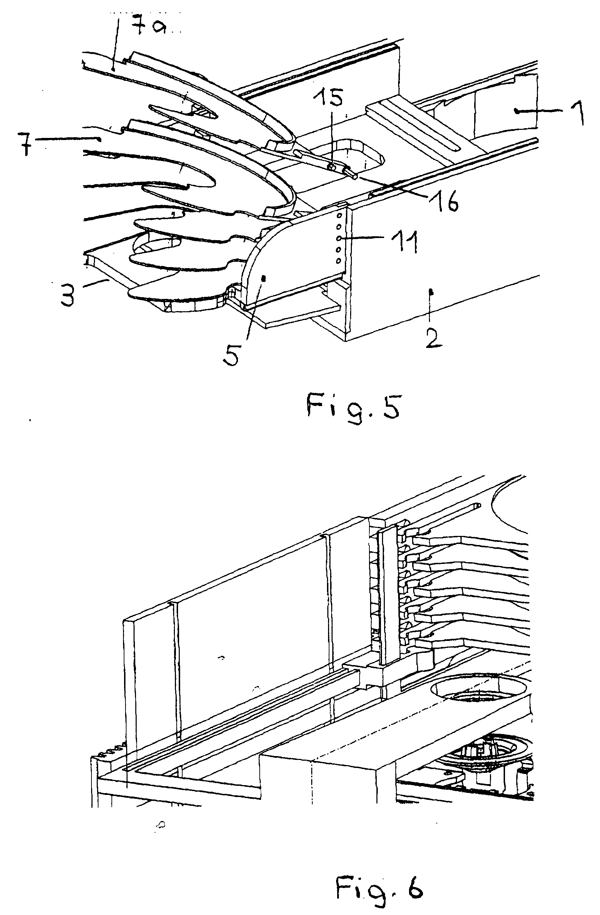

Fig. 4 shows a special embodiment for implementing the pivoting operation and the spreading of the disk plates 7. Each disk plate 7 is provided at its opposite edges with a first pin cooperating with a corresponding hole 11 within the side walls 4, 5 so that the disk plates 7 can rotate about the axis of said pins and holes. The side wall 2 of the chassis 1 is provided with five parallel extending slots 12. Each of the slots 12 has a substantially horizontal section 13 and a subsequent downwardly inclined section 14. The length of the inclined portion 14 is substantially zero at the lowest slot 12a and increases from slot to slot in the upward direction. If the drawer 3 is pulled away from the chassis 1 a second pin of each disk plate for the first moves along the horizontal section 13 from the right to the left. When reaching the left end of the section 13 that is the beginning of the inclined section 14 the second pin is moved downwardly so that the pivoting movement for the spreading of the five disk plates 7 is realized as shown in Fig. 4. The different lengths of the inclined portions 14 causes different pivoting angles for achieving the spreading the disk plates 7.

According to a further not shown embodiment downwardly inclined sections 14 are substituted or combined with upwardly inclined sections for pivoting platter 7 downwards or upwards and downwards.
Furthermore, according to a further not shown embodiment platter 7 and said substantially horizontal section 13 are downwardly inclined for pivoting platter 7 upwards and/or downwards.

Fig. 5 shows the upper disk plate 7a in explosion view. The rear edge of the disk plate 7a includes a short pin 15 cooperating with one of the holes 11 and a longer pin 16 cooperating with the slots 12 (not shown in Fig. 5) within the side wall 2 thus operating according to the principle explained in connection with Fig. 4.

Fig. 6 shows a diagram for a disk moving mechanism.

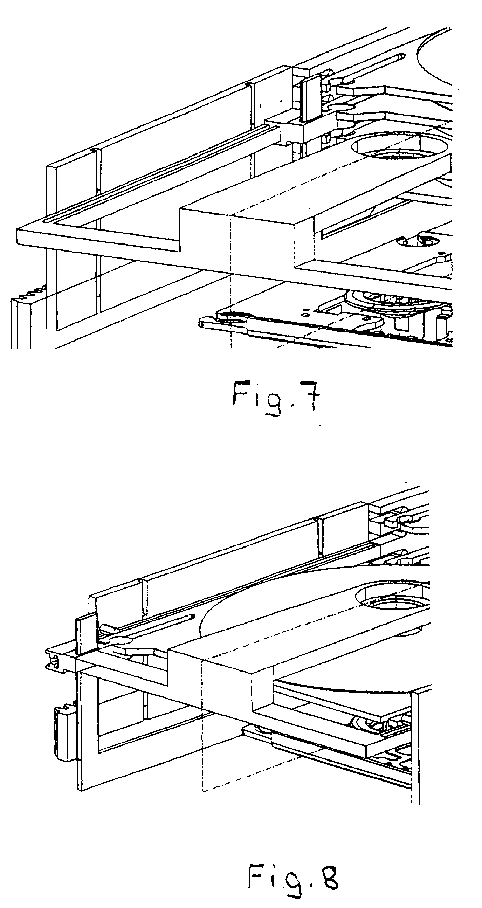

Fig. 7 shows a choosing platter for the disks.

Fig. 8 shows a corresponding pull back platter for the disks.

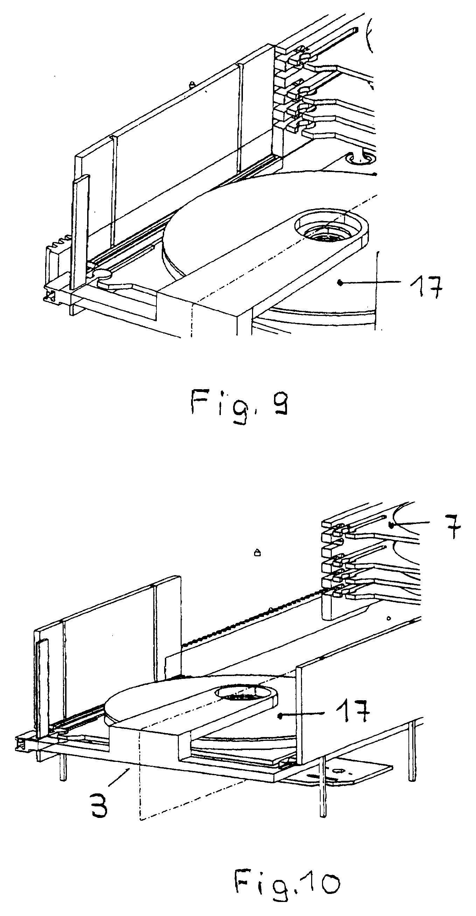

Fig. 9 shows a pull down platter together with a disk 17 in playback position and

Fig. 10 shows an open drawer 3 during playback position of the disk 17 pulled away from one of the disk plate 7 for playback.

According to a further not shown embodiment the changer is vertical arranged and the disk plates 7 are provided with means to hold disks 17 on said disk plates 7.

## Claims

1. Changer for CD and/or DVD disks including a drawer slidably mounted within a chassis of the changer and supporting a number of disk plates arranged one above the other and each holding a disk therein,
**characterized in that** the disk plates (7) each are mounted at one end via a hinge (9, 10) at the drawer (3) in such a way that they are pivotable about a horizontal axis of the chassis (1) of the changer.

2. Changer according to claim 1, **characterizing in that** each disk plate (7) is provided with a pin (9) at its edge remote from the edge at which the disk can be drawn from the disk plate (7) said pin (9) cooperating with an opening (10) in a side wall (5) of the drawer (3) and/or an opening within a side wall (2) of the chassis (1).

3. Changer according to claim 1, **characterizing in that** the disk plate (7) comprises at each of its opposite edges two pins (15, 16) the first pin (15) cooperating with an opening (11) within a side wall (5) of the drawer (3) and the second pin (16) cooperating with an opening (12) within a side wall (2) of the chassis (1).

4. Changer according to claim 3, **characterizing in that** the opening within the side wall (2) of the chassis (1) has the form of a slot (12) extending perpendicular to the pivoting axis of the disk plates (7).

5. Changer according to claim 4, **characterizing in that** the slot (12) within the side wall (2) of the chassis (1) has an horizontal section (13) and a subsequent downwardly inclined section (14) enabling a pivoting of the disk plate (7) within the drawer (3) about an horizontal axis.

6. Changer according to claim 5, **characterizing in that** the lowest slot (12a) for the lowest disk plate (7b) has substantially no downwardly inclined section and that the length of the downwardly inclined section (14) increases from one disk plate to the next above positioned disk plate so that the disk plates (7) are pivotable by angles increasing from the lowest to the upper disk plate (7) and the disk plates (7) become spreaded from eachother.

7. Changer according to claim 1, **characterizing in that** the pivoting operation of the disk plates (7) can be implemented manually.

8. Changer according to claim 1, **characterizing in that** the pivoting operation of the disk plates (7) is implemented by electrical-mechanical driving means.

9. Changer according to claim 1, **characterized in that** the disk plates (7) each are mounted at one end via a hinge (9, 10) at the drawer (3) in such a way that they are upwards and/or downwards pivotable about a horizontal axis of the chassis (1) of the changer.

10. Changer according to claim 1, **characterized in that** the changer is vertical arranged and the disk plates (7) are provided with means to hold disks (17) on said disk plates (7).
